# EUROPÄISCHE PATENTSCHRIFT

(11) **EP 1 820 404 B1**
(45) Veröffentlichungstag und Bekanntmachung des Hinweises auf die Patenterteilung: **08.07.2009**
(21) Anmeldenummer: 07002927.7
(22) Anmeldetag: 12.02.2007
(51) Int. Cl.: A22C 13/00

(54) **Nahrungsmittelhülle mit einer Bindemittelschicht, die übertragbare Additive enthält**
Foodstuff cover with a binding material layer which contains transmittable additives
Emballage d'aliment doté d'une couche d'adhésif, comprenant des additifs transmissibles

(30) Priorität: 15.02.2006 DE 102006006869; 14.06.2006 DE 102006027493
(43) Veröffentlichungstag der Anmeldung: 22.08.2007
(73) Patentinhaber: Kalle GmbH, 65203 Wiesbaden (DE)
(72) Erfinder: König, Martina, 65207 Wiesbaden (DE); Auf der Heide, Dirk, 49594 Alfhausen (DE); Büker, Gert, 75428 Illingen (DE); Lunow, Marion, 75428 Illingen (DE); Wolf, Hans Peter, 49179 Ostercappeln (DE)
(74) Vertreter: Plate, Jürgen

(56) Entgegenhaltungen:
- WO-A-03/086087
- WO-A-20/04028258
- WO-A-20/05074691
- WO-A-20/06012601
- DE-A1- 10 314 699
- DE-A1- 19 500 470

## Beschreibung

Die Erfindung betrifft eine ein- oder mehrschichtige, flächen- oder schlauchförmige Nahrungsmittelhülle mit einem Träger auf Basis eines nicht wasserlöslichen, thermoplastischen Polymers, eines Polymers tierischen oder pflanzlichen Ursprungs oder regenerierter oder gefällter Cellulose und einer übertragbaren Schicht. Sie betrifft daneben ein Verfahren zur Herstellung der Hülle und ihre Verwendung. Eine derartige Hülle und Verfahren ist aus WO-A-03/086087 bekannt.

Schlauchförmige Nahrungsmittelhüllen, speziell künstliche Wursthüllen, die auf das Lebensmittel bzw. das Wurstbrät übertragbare Stoffe enthalten, wie Lebensmittelfarben, Gewürze, Aromen, Geschmacksstoffe oder Ähnliches, sind bereits bekannt. So ist in der EP-A 0 986 957 eine Hülle beschrieben mit einer Schicht auf Basis von Polyolefin, Polyester, Polyvinylidenchlorid (PVDC), Polyvinylchlorid (PVC) oder Polystyrol sowie einer weiteren Schicht, die für den Nahrungsmittelkontakt vorgesehen ist. Diese innere Schicht umfaßt ein Polysaccharid und/oder Protein als Bindemittel und - damit vermischt - einen Aroma- und/oder Geschmacksstoff. Dies ist bevorzugt ein flüssiges Grillhähnchenaroma, Honig, Limonenöl oder Orangenöl. Der Aroma- bzw. Geschmacksstoff kann auch ein partikelförmiger Feststoff sein, beispielsweise fein gemahlener Pfeffer. Die durchschnittliche Größe der Partikel beträgt dann allgemein 0,5 bis 50 µm, bevorzugt 1 bis 30 µm.

In der WO 98/31731 ist eine ganz ähnliche Nahrungsmittelhülle offenbart. In beiden Schriften wird angegeben, daß die innere Schicht zusätzlich noch einen Vernetzer, beispielsweise eine Verbindung mit mindestens 2 Carbonylgruppen, enthalten kann. Körnige bis grobkörnige oder gar stückige Aroma- und/oder Geschmacksstoffe werden nicht aufgeführt.

Gegenstand der EP-A 992 194 (= DE-A 198 46 305) ist eine Barrierehülle aus einem Kunststoffmaterial, wobei die Hülle auf der Innenseite mit einer Lage aus einem saugfähigen, mit Farb- oder Aromastoffen getränkten Material (Gewebe, Gewirke oder Gestricke) ausgekleidet ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Sie wird im allgemeinen aus einer entsprechenden Flachfolie durch Heißsiegeln oder Kleben hergestellt und sorgt für die mechanische Stabilität. Ein starker Nachteil dieser Hülle besteht darin, daß sie sich nicht vollständig abziehen läßt, d.h. daß Teile der Innenlage auf dem Lebensmittel zurückbleiben. Die Ursache wird in einer nicht ausreichend mechanisch stabilen Verbindung zwischen dem Kunststoffmaterial und der textilen Innenlage gesehen.

Die Wursthülle gemäß der DE-A 195 00 470 weist auf der Innenseite eine aus dem flüssigen Zustand erstarrende Haftschicht auf, wobei als Hüllenmaterial Baumwollgewebe mit Leinenbindung offenbart ist. Vordem Erstarren werden darauf Gewürzpartikel, insbesondere Pfefferkörner oder gemahlener Pfeffer, aufgebracht. Das geschieht bevorzugt durch Aufschleudern mit speziellen Vorrichtungen.

In der EP-B 0 408 164 ist ein Matrixmaterial aus natürlichen oder synthetischen Fasern beschrieben, das gegenüber Wasser und Hitze beständig ist. Auf diesem Matrixmaterial ist eine Schicht aus Kräutern, Gewürzen, Meeresfrüchten oder Milcherzeugnissen in Pulver- oder Chipsform aufgetragen. Die Verbindung zwischen der Schicht aus dem Nahrungsmittel und dem Matrixmaterial erfolgt durch eine Klebeschicht aus einem eßbaren, wasserlöslichen, hochmolekularen Material, das als Nahrungsmittelergänzung geeignet ist. Diese Klebeschicht umfaßt natürliche Polysaccharide, Carboxymethylcellulose-Natrium, Carboxymethylstärke oder ähnliches. Auch gemäß diesem EP-Patent wird die Übertragung durch eine Hitzebehandlung erzielt.

Gegenstand der WO 2004/094544 ist eine Nahrungsmittelumhüllung, mit der sich dunkelbraunes oder schwarzes Karamelcolor gleichmäßig und stabil auf die Oberfläche eines Nahrungsmittels, beispielsweise Wurst, übertragen läßt, um ihr ein geröstetes Aussehen zu verleihen. Hierzu dient eine fraktionierte Karamelmischung mit einem bestimmten Gehalt an festen Anteilen, die ein Molekulargewicht von größer als 10 000 besitzen, bei deren Einsatz auch eine bessere Abschälbarkeit von dem umhüllten Gut erzielt wird. Als Basismaterial für die Umhüllung dienen faser- und nichtfaserförmige, natürliche oder synthetische Materialien. Die Übertragung der Farbschicht erfolgt während einer längeren Verweildauer bei nicht genannten Temperaturen.

Weiterhin ist bekannt, Gewürze unter Verwendung von Gelatine oder Stärke als Bindemittel auf Lebensmittel aufzutragen.

All die bekannten Hüllen mit Innenlagen oder Innenbeschichtungen, die einen übertragbaren Zusatzstoff enthalten, sowie der Auftrag unter Verwendung von Gelatine oder Stärke, haben den Nachteil, daß entweder ihre Herstellung technisch sehr aufwendig und arbeitsintensiv ist, daß sie die Additive nicht in ausreichender Menge übertragen können oder daß sie sich schlecht abziehen lassen. Stärke enthaltende Hüllen sind zudem sehr anfällig für mikrobiologische Kontamination.

Schlauchförmige Nahrungsmittelhüllen aus regenerierter Cellulose, die auch mit einer Faserpapiereinlage verstärkt sein können und dann als Cellulose-Faserdärme oder einfach als Faserdärme bezeichnet werden, werden wegen ihrer bewährten, guten Eigenschaften wie Elastizität und Festigkeit besonders bei mittleren und großen Kalibern vielfältig im Nahrungsmittelsektor eingesetzt, bevorzugt dort, wo eine hohe Durchlässigkeit für Wasserdampf und Sauerstoff gewünscht wird, beispielsweise bei der Herstellung von Rohwurst (speziell von Salami). Es ist jedoch schwierig, mit solchen Hüllen einen Aromaübertrag mit festen Stoffen zu erreichen.

Aufgabe der vorliegenden Erfindung war es deshalb, eine Nahrungsmittelhülle bereitzustellen, welche die genannten Nachteile nicht aufweist.

Gelöst wurde die Aufgabe mit einer Nahrungsmittelhülle gemäß Anspruch 1.

Gegenstand der vorliegenden Erfindung ist demnach eine ein- oder mehrschichtige Nahrungsmittelhülle mit einem Träger auf Basis mindestens eines nicht wasserlöslichen, thermoplastischen Polymers, eines Polymers tierischen oder pflanzlichen Ursprungs (im Folgenden als "natürliches Polymer" bezeichnet) oder regenerierter oder gefällter Cellulose, die eine Beschichtung aufweist, die ein Bindemittel und mindestens ein Additiv enthält, das auf das Füllgut übertragbar ist, die dadurch gekennzeichnet ist, daß das Additiv aus fein- bis grobkörnigen Nahrungsmitteln mit einer mittleren Partikelgröße von mindestens 60 µm besteht.

Unter den als "Additiv" oder "körniges Additiv" bezeichneten "Nahrungsmitteln" sind sämtliche Gewürze, Gemüse, Kräuter, Pilze, Getreide und Nüsse sowie Käsesorten in jeder beliebigen Form (z. B. gerieben, flockig, stückig oder geschmolzen etc.) zu verstehen, sofern sie in der Frischfleisch- und Fischverarbeitung oder der Wurst- und Käseproduktion Verwendung finden (diese Einschränkung gilt auch für die weiter unten genannten Nahrungsmittelzusatzstoffe).

Im Unterschied dazu sind Nahrungsmittel, die von der erfindungsgemäßen Hülle umschlossen werden sollen, als "Füllgut" bezeichnet oder, wo Verwechslungen mit den vorgenannten Additiven ausgeschlossen sind, auch als "Lebensmittel".

Vorzugsweise ist das Bindemittel in Wasser praktisch unlöslich, durch Wärmeeinwirkung jedoch aktivierbar. Allgemein sind dazu Temperaturen bis etwa 90 °C ausreichend. Das Additiv wird dann auf das in der Hülle befindliche Füllgut übertragen. Es ist aber auch möglich, das Bindemittel so auszuwählen, daß es bereits bei tiefen Temperaturen die in ihm verankerten Additive auf das umhüllte Gut überträgt.

Es war überraschend, daß sich mit der erfindungsgemäßen Hülle auch Lebensmittel in rohem Zustand, die einer besonders schonenden Behandlung bedürfen, auf einfache Weise mit solchen Additiven versehen lassen. Dadurch wird das teure, arbeits- und zeitintensive traditionelle Beschichten wirkungsvoll ersetzt. Neben rohem Füllgut können ferner empfindliche Lebensmittel, die gekühlt verarbeitet oder aufbewahrt werden müssen, wie gekochter Schinken, Brüh- und Kochwurst, mit den jeweils gewünschten Überzügen versehen werden. So können auch weitere, einem solchen Beschichtungsverfahren bisher nicht zugängliche Sektoren im Lebensmittelbereich erschlossen werden. Selbstverständlich lassen sich mit der erfindungsgemäßen Hülle auch andere Additive wie Flüssigrauch und/oder Lebensmittelfarben übertragen.

Die Nahrungsmittelhülle kann flächen- oder schlauchförmig sein. Die Beschichtung befindet sich auf der dem Füllgut zugewandten Seite, im Falle einer schlauchförmigen Hülle dementsprechend auf der Innenseite. In einer besonderen Ausführungsform weist die Hülle eine Längsnaht auf.

Die Nahrungsmittelhülle gemäß der Erfindung weist gegenüber dem Stand der Technik folgende Vorteile auf. Sie ist
- einfach herzustellen und
- kann eine genügende Menge an körnigen Additiven aufnehmen und auf das Füllgut übertragen.
- Das Bindemittel besitzt eine gute Haftung an den genannten Trägermaterialien und eine gute Klebkraft für die Additive.
- Der beschichtete Träger besitzt eine hohe Elastizität und läßt sich vollständig wieder von dem Füllgut entfernen, wobei ein gleichmäßiger Übertrag der Additive gewährleistet ist.
- Die Umhüllung besitzt mikrobiologische Stabilität und eine hohe Lagerfähigkeit.
- Die Hülle weist eine definiert einstellbare Sauerstoff- und Wasserdampfdurchlässigkeit auf und
- ist sowohl für Lebensmittel verwendbar, die bei tiefen Temperaturen verarbeitet, als auch für solche, die in der Hülle gebrüht, gekocht oder anderweitig erhitzt werden.

Basismaterialien für die Nahrungsmittelhülle sind im allgemeinen nicht wasserlösliche, thermoplastische, synthetische Polymere, wie Polyolefin (PO), Polyamid (PA), Polyester, Polyvinylidenchlorid (PVDC), Polyvinylchlorid (PVC) und/oder Polystyrol. Vorzugsweise ist das Basismaterial jedoch regenerierte oder gefällte Cellulose. Cellulosehüllen können auch verstärkt sein, vorzugsweise mit einem naßfesten Faserpapier, insbesondere einem Hanffaserpapier. Hüllen auf Basis von synthetischen Polymeren können einschichtig sein, z.B. Hüllen auf Basis von Polyolefin, vorzugsweise von Polyethylen (PE), insbesondere von Linear Low Density Polyethylene (LLDPE), oder mehrschichtig sein, wobei die letzteren gegebenenfalls Haftvermittlerschichten (HV) als Zwischenschichten aufweisen. Beispielhaft hierfür seien genannt Hüllen mit einer Schichtabfolge PA/PO/PA, PA/(PO+HV)/PA, PA/HV/PO/HV/PA oder PE/HV/PA. Als Haftvermittler sind beispielsweise Polyolefine mit funktionellen Gruppen, beispielsweise mit Maleinsäureanhydrid gepfropftes Polyethylen, verwendbar. Es ist auch möglich, Polymere tierischen oder pflanzlichen Ursprungs, d.h. "natürliche Polymere" einzusetzen.

Der Träger kann ein Textilmaterial aus einem oder mehreren der genannten Polymeren natürlichen und/oder synthetischen Ursprungs sein. Unter der Bezeichnung "Textilmaterial" sollen dabei neben Geweben auch Gewirke, Gestricke, Gelege, Vliese, Spinnvliese und andere Flachmaterialien aus Fasern verstanden werden. Beispiele für textile Träger sind Gewebe aus Zellwolle oder aus einem Zellwolle/Polyester-Gemisch. Der Träger kann auch eine Folie sein oder eine Kombination aus Textilmaterial und Folie.

Die Bindemittel oder Bindemittelgemische, mit denen die Nahrungsmittelhülle beschichtet ist, sind vorzugsweise in kaltem und heißen Wasser (bis etwa 90 °C) praktisch unlöslich. Gegebenenfalls sind sie durch geeignete Behandlung, z.B. durch Hitzekoagulation, unlöslich gemacht. Es handelt sich beispielsweise um Proteine oder Polysaccharide oder Gemische daraus. Geeignet sind insbesondere Cellulosederivate, speziell Ether oder Ester der Cellulose, wie Methylcellulose, daneben auch Alginsäure und/ oder Alginat, Chitosan, Pektin, Carrageenan oder Stärke bzw. Stärkederivate, Proteine, wie Gelatine und Gelatine-Hydrolysate, Kollagen, Albumin, Casein, Zein, Weizenprotein, Sojaprotein oder Erbsenprotein, vorzugsweise Bluthydrolysat, Blutplasma, Myoglobin, Proteinhydrolysate mit Molekulargewichten von 5 000 bis 30 000 Dalton, sauer verkochtes Kollagen mit Molekulargewichten von 20 000 bis 1 000 000 Dalton oder Desamidokollagen, das durch alkalische Hydrolyse erhältlich ist. Die genannten, in kaltem und heißem Wasser unlöslichen bzw. unlöslich gemachten Bindemittel werden insbesondere auf textile Träger aufgebracht.

Als Bindemittel geeignet sind ferner Fette, Wachse, Öle oder andere hydrophobe, in Wasser nicht lösliche Substanzen, die unter Wärmeeinwirkung bis etwa 90 °C erweichen oder flüssig werden, dabei ihre Klebkraft verlieren und so eine Übertragung des Additivs bewirken. Das können Talge, trocknende Öle, nichttrocknende Öle, halbtrocknende Öle, Wachse, Fettsäuren, Fettsäureester, Fettalkohole oder Mischungen daraus sein. Diese hydrophoben Substanzen können mit den vorgenannten Proteinen, insbesondere mit hitzekoagulierbaren Proteinen abgemischt werden. Lipide haben den zusätzlichen Vorteil, daß sie - soweit sie mit übertragen werden - als Geschmacksverstärker für Gewürze oder andere Additive dienen.

Das Bindemittel wird dabei nach seinem Haftvermögen gegenüber dem Trägermaterial der Hülle und dem am Bindemittel haftenden Additiv ausgewählt. Mit Hilfe der Bindemittel lassen sich zudem die Haft- und Trenneigenschaften der Hülle an das jeweilige Füllgut gezielt einstellen. Die Haftung soll allgemein so stark sein, daß sich die Hülle beim Lagern nicht ablöst ("abstellt"), andererseits so schwach, daß sie sich problemlos abziehen läßt, ohne daß Bestandteile des Füllguts ihr haften bleiben. Die eingesetzten Bindemittel zeichnen sich auch dadurch aus, daß sie zum einen vollkommen geschmacksneutral und zum anderen für den menschlichen Verzehr geeignet sind. Der Geschmack des Füllguts und der Additive ist nicht beeinträchtigt.

Zur Erhöhung der Elastizität, der Benetzbarkeit und der mikrobiologischen Stabilität kann es zweckmäßig sein, das Bindemittel mit mindestens einer entsprechenden Komponente zu kombinieren. Hierzu eignen sich Milchsäure und deren Salze, beispielsweise Natriumlactat, Glycerin, Emulgatoren wie Lecithin und/oder Fette und Öle. Sie gewährleisten einen besonders gleichmäßigen und kontinuierlichen Auftrag des Bindemittels. Der Anteil der Komponente an der Beschichtungs- bzw. Imprägnierungsflüssigkeit liegt zweckmäßig bei 1,5 bis 15,0 Gew.-%, bevorzugt bei 2,0 bis 8,0 Gew.-%.

Die Hülle gemäß der Erfindung eignet sich besonders zur Herstellung von Koch- oder Brühwurst. Dabei werden im allgemeinen Temperaturen von 75 bis 90°C (Kerntemperatur) erreicht. In diesem Temperaturbereich wird das Bindemittel soweit aktiviert, daß der Transfer des Additivs problemlos eintritt. Die Hülle kann auch räucherbar sein. In einer weiteren Ausführungsform weist sie zusätzlich mindestens eine Außenbeschichtung auf, die die Wasserdampf- und Sauerstoffdurchlässigkeit effektiv vermindert. Die Außenbeschichtung umfaßt beispielsweise ein Polyvinylidenchlorid(PVDC)-Harz. Für eine Wasserdampf-Sperrschicht geeignet sind im allgemeinen Polymere, die Einheiten von mindestens einem der folgenden Monomeren enthalten: Vinylacetat, Vinylalkohol, Ethylen, Butadien, Styrol, Acrylsäure und/oder Methacrylsäure. Die Beschichtung bei den insbesondere für Brüh- und Kochwurstanwendungen vorgesehenen Hüllen (nach dem Trocknen) hat allgemein ein Gewicht von bis zu 150 g/m², bevorzugt 30 bis 120 g/m². Probleme durch Delaminierung treten bei den beschichteten Hüllen in der Regel nicht auf. Sie haben allgemein eine Wasserdampfdurchlässigkeit von weniger als 150 g/m²·d, bevorzugt weniger als 100 g/m²·d und für Hochbarriereanforderungen weniger als 5 g/m²·d. Durch die zusätzliche Beschichtung kann sich zudem die Bedruckbarkeit der Nahrungsmittelhüllen verbessern.

Das Additiv besitzt im allgemeinen eine feste Konsistenz und hat eine körnige bis grobkörnige, gegebenenfalls auch stückige, partikelförmige Struktur. Neben den üblichen Aroma- und/oder Geschmacksstoffen wie Pfeffer, Koriander, Curry, Chili, Paprika, Zimt, Karamel oder ähnlichen Gewürzen oder Gewürzmischungen gehören dazu auch Knoblauch, Zwiebel, Lauch, Karotten, Paprika- und Pfefferschoten, Sellerie, Spargel und sonstiges Gemüse in jeder möglichen Form, Pilze, Früchte (Ananas- oder Apfelstückchen, Johannisbrot), aber auch frische oder getrocknete, gerebelte Kräuter, z.B. Petersilie oder Dill, insbesondere Dillspitzen, Auch geriebener, flockiger oder geschmolzener Käse ist als Additiv möglich. Grundsätzlich kann als Additiv alles verwendet werden, was Fleisch-, Wurst-Fisch- oder Käseprodukte schmackhafter macht oder veredelt.

Das übertragbare Additiv kann aber auch gemahlen sein, wobei die mittlere Partikelgröße im allgemeinen 60 µm oder mehr, bevorzugt 70 µm oder mehr, beträgt. Die maximale Partikelgröße kann bis zu 1,0 mm und mehr betragen. Die mittlere Partikelgröße liegt allgemein im Bereich von 60 bis 800 µm, bevorzugt von 70 bis 500 µm, besonders bevorzugt von 80 bis 400 µm, ganz speziell 90 bis 250 µm. Die körnigen Additive bestehen bevorzugt aus Partikeln, die mit bloßem Auge erkennbar sind. Die Partikel können dabei eine kugelförmige, längliche, plättchenförmige, stäbchenförmige oder eine andere regel- oder unregelmäßige Form besitzen.

Das Additiv kann beispielsweise nach vorheriger Gefriertrocknung zerkleinert werden, so daß sich eine gleichmäßige, relativ dünne und gut haftende Beschichtung herstellen läßt.

Neben den vorgenannten Additiven können auch Nahrungsmittelzusatzstoffe, insbesondere farbgebende Mittel, übertragen werden. Bevorzugt sind zu nennen: Zuckercouleur, Lebensmittelfarbstoffe E124 (Cochenillerot A), E155 (Braun HT), E120 (Carmin), Paprika-Oleoresin (E160C), Konzentrate und Extrakte aus Holunder, Pflaume oder Tomate, Getreide (insbesondere Gerste) und Zubereitungen davon (wie Malz oder Malzextrakt), Johannisbrotkernmehl, Guarkernmehl, Kaffee, Zichorie oder Kakao etc. Die mittlere Partikelgröße des Nahrungsmittelzusatzstoffes ist im allgemeinen kleiner als 60 µm, z. B. Flüssigrauch.

Die Menge, in der das Additiv aufgebracht wird, hängt ganz wesentlich von dessen Art ab. In den meisten Fällen hat es sich als zweckmäßig erwiesen, diesen Stoff in einer Menge von 3 bis 150 g/m², bevorzugt von 5 bis 120 g/m², aufzubringen. Das Gesamtgewicht der Imprägnierung oder Beschichtung beträgt nach dem Trocknen bevorzugt 10 bis 200 g/m², insbesondere 30 bis 150 g/m².

Die Bindemittelschicht als Transferschicht für das Additiv wird bevorzugt in Form einer (wäßrigen) Lösung auf das Trägermaterial aufgebracht.

Eine Übertragung des Additivs von der Bindemittelschicht auf das Füllgut während des Brüh-, Koch- oder sonstigen Erhitzungsvorgangs erfolgt dadurch, daß aufgrund der Wärmeeinwirkung die Haftung an dem Bindemittel vermindert und das Additiv freigesetzt wird. Zur Aktivierung des Bindemittels sind Temperaturen von 30 bis etwa 90 °C ausreichend.

In einer besonderen Ausführungsform wird als Bindemittel ein unter Wärmeeinwirkung koagulierbares Protein verwendet, wie Molkeprotein, Eiklarprotein oder Blutplasma, oder aus dem Protein hergestellte oder isolierte Fraktionen. Nach dem Koagulieren ist das Protein praktisch unlöslich in Wasser. Das koagulierbare Protein läßt sich besonders gut mit einer Hülle auf Textilbasis kombinieren. Auf die Proteinschicht werden dann die Additive, d.h. insbesondere die Gewürze, aufgebracht. Sie können als gleichmäßige Schicht oder auch nur in vorbestimmten Bereichen, d.h. bildmäßig, aufgebracht werden. Anschließend wird das Protein durch Erhitzen koaguliert und dadurch praktisch wasserunlöslich gemacht. Ebenso gut kann die Koagulation erfolgen, wenn das Nahrungsmittel in der Hülle gebrüht oder gekocht wird. Nach dem Koagulieren ist das Protein zudem so gut wie nicht mehr klebrig. Das koagulierbare Protein kann jedoch auch auf eine Folie als Trägermaterial aufgebracht werden. Auf die Proteinschicht wird dann, wie beschrieben, das Additiv, d.h. insbesondere das Gewürz, aufgebracht.

Um zu verhindern, das sich Gewürzpartikel bei der weiteren Verarbeitung von dem Träger lösen, wird auf die Gewürzschicht zweckmäßig noch eine dünne Schicht aus einem filmbildenden Protein aufgebracht. Als besonders geeignet dafür haben sich Kollagenfasern erwiesen. Das so beschichtete Trägermaterial kann anschließend zu einem Schlauch geformt werden, dessen Längskanten miteinanderfest verbunden werden, vorzugsweise fest miteinander vernäht.

Die auf der Gewürzschicht befindliche dünne Schicht aus einem filmbildenden Protein verhindert zugleich ein Herausbrechen von Gewürzpartikeln beim Füllen der schlauchförmigen Nahrungsmittelhülle. Wird die gefüllte Hülle anschließend erhitzt auf Temperaturen, wie sie bei der Herstellung von Brüh- oder Kochwurst üblich sind (d.h. auf etwa 80 bis 90 °C), dann wird das Gewürz vollständig auf die Oberfläche des darin befindlichen Nahrungsmittels übertragen. Das gilt insbesondere, wenn das Nahrungsmittel Wurstbrät ist. Dabei bleibt gewöhnlich ein Teil des koagulierten Blutplasmas auf der Hülle zurück, während sich ein anderer Teil irreversibel mit dem Brät verbunden hat, wie sich nach dem Abziehen der Hülle feststellen läßt. Das Blutplasma löst sich bei der Verarbeitung der Nahrungsmittelhülle nicht wieder auf. Es verändert sich auch nicht unter der Einwirkung von Wasser oder Wasserdampf.

Unterhalb der Raumtemperatur erfolgt die Übertragung der Additive vorzugsweise durch innigen Kontakt des Füllguts, insbesondere unter leichtem Druck, mit der Nahrungsmittelhülle. Diese Übertragung findet schon bei Temperaturen unter 15°C, vorzugsweise unter 10°C und insbesondere unter 7°C statt. Im allgemeinen beträgt die Übertragungsdauer weniger als 50 Stunden, vorzugsweise weniger als 40 Stunden, insbesondere weniger als 30 Stunden. Die Übertragungsdauer hängt vom Einzelfall ab und kann durch einfache Vorversuche ermittelt werden.

Bei diesem Übertragungsverfahren werden speziellen Bindemittel eingesetzt, die sich ohne Wärmeeinwirkung von der Umhüllung lösen und mit dem Füllgut verbinden. Geeignete Substanzen sind beispielsweise alkalisches Milcheiweiß, Methylcellulose und Eiweißhydrolysat.

In beiden vorgenannten Ausführungsformen kann eine zusätzliche Bindemittelschicht auf das Additiv aufgebracht werden. Das Bindemittel dafür kann identisch sein mit dem in der unter dem Additiv liegenden Bindemittelschicht. Allgemein besteht diese zweite Klebeschicht aus filmbildenden Substanzen. In einer bevorzugten Ausführungsform besteht die zusätzliche Bindemittelschicht aus einem filmbildenden Protein oder einem Gemisch solcher Proteine, besonders bevorzugt aus Kollagenfasern. Die zusätzliche Schicht erhöht die Bindung des Additivs zum Brät und fixiert es gleichzeitig auf dem Träger.

Gegenstand der Erfindung ist ferner ein Verfahren zur Herstellung der Hülle. Als Ausgangsmaterial dient in der Regel eine schlauchförmige Hülle aus einem thermoplastischen Polymer oder aus Cellulose, wobei die Hülle an einer der beiden Flachlegekanten mit einem Messer aufgeschnitten und dann aufgerollt wird. Dieses Rollenmaterial wird in einem zweiten Verfahrensschritt über eine Formschulter zu einem bahnförmigen Flachmaterial geöffnet, die Innenseite zuerst mit einem Bindemittel, dann mit dem entsprechenden körnigen Additiv beschichtet und anschließend in einem Trockenkanal bei geeigneter Temperatur, abhängig von der Art des Bindemittels und des Additivs, getrocknet. Gegebenenfalls kann zur Fixierung und Glättung der Oberfläche eine weitere Bindemittelschicht über das körnige Additiv gelegt werden. Direkt nach dem Trocknungsvorgang kann das flachgelegte, beschichtete Hüllenmaterial über eine weitere Formschulter geführt werden, die es erneut in eine runde Form bringt. Die Längskanten des erhaltenen rundgelegten Trägermaterials können dann miteinander verbunden werden, insbesondere durch Aufbringen eines Klebebandes, durch Zusammenkleben der überlappenden Enden oder durch Einbringen eines Polyurethan-Bandes, das unter Wärmezufuhr oder durch UV-Licht gehärtet wird, oder durch Vernähen. Das beschichtete Material besitzt dann eine entsprechende ausgestaltete Längsnaht.

Die erneute Rundformung nach dem Beschichten kann auch unterbleiben. Dann wird ein Flachmaterial erhalten, das zum Einschlagen beispielsweise von größeren oder unregelmäßig geformtem Füllgut verwendet werden kann. Wird die Übertragung des körnigen Additivs auf das darin verpackte Füllgut durch Erwärmen gewünscht, kann es beispielsweise durch UV-Strahlen oder Mikrowellen erfolgen. Für die Übertragung bei tiefen Temperaturen wird zweckmäßig ein solches beschichtetes Flachmaterial eingesetzt.

In einer weiteren Variation des Herstellungsverfahrens geht man von einer schlauchförmigen, vorzugsweise nahtlosen Hülle aus, die auf der Außenseite beschichtet, mit einem Additiv versehen, getrocknet und nach dem Trocknen gewendet wird. Erhalten wird auf diese Weise eine innenbeschichtete Hülle. Sie besteht vorzugsweise aus Polymermaterial, insbesondere aus Polyamiden und/oder Copolyamiden.

Das Beschichten oder Imprägnieren der Nahrungsmittelumhüllung auf der dem Füllgut zugewandten Seite kann nach Verfahren erfolgen, die dem Fachmann prinzipiell bekannt sind. In einem besonders einfachen Verfahren wird die Beschichtung mit Hilfe einer Rakel auf ein entsprechendes Flachmaterial aufgetragen. Aber auch andere, dem Fachmann bekannte gängige Mittel können eingesetztwerden. Die beschichtete Umhüllung kann dann wie üblich einen Trockner durchlaufen. Falls notwendig, wird die Hülle anschließend auf die gewünschte Endfeuchte gebracht ("konditioniert"), aufgerollt und verpackt.

Die erfindungsgemäße schlauchförmige Nahrungsmittelhülle kann auf übliche Art konfektioniert werden. Sie kann beispielsweise abschnittsweise zu Raupen gerafft oder zu einseitig verschlossenen (in der Regel abgebundenen) Abschnitten verarbeitet werden.

In die so hergestellte Hülle wird das Füllgut eingebracht. Hierbei handelt es sich beispielsweise um Wurstbrät für Brüh- und Kochwurst. Füllgüter, die nicht in pastöser Form vorliegen, wie Schinken, Pökelware und Käse können im allgemeinen mit dem beschichteten Flächenmaterial umhüllt werden, wobei die Verwendung einer schlauchförmigen Hülle aber nicht ausgeschlossen ist. Mit Hilfe der erfindungsgemäßen Hülle lassen sich diese Füllgüter mit den übertragbaren Additiven versehen. Nach dem Abschälen der Trägermaterials der Hülle verbleibt die Beschichtung mit dem Additiv auf der Oberfläche des Füllguts.

Verwendung findet die Nahrungsmittelhülle gemäß der Erfindung zum Transfer von übertragbaren Additiven auf Lebensmittel unter Wärmeeinwirkung, bei Raumtemperatur oder auch darunter. So kann sie beispielsweise bei der Herstellung von Koch- und Brühwurst, aber auch zur Veredelung von Schinken, Pökelware und sogar Käse, z.B. Schmelzkäse, eingesetzt werden. Zum anderen eignet sie sich auch für den Transfer von übertragbaren Additiven auf besonders schonend zu behandelndes Füllgut und auf empfindliches Füllgut, das gekühlt verarbeitet oder aufbewahrt werden muß. Beispiele dafür sind Fisch, Frischfleisch aber auch gekochter Schinken, Brüh- und Kochwurst sowie Rohwurst.

Die nachfolgenden Beispielen dienen zur Erläuterung der Erfindung. Prozente sind darin als Gewichtsprozente zu verstehen, soweit nicht anders angegeben oder aus dem Zusammenhang unmittelbar ersichtlich.

### Beispiel 1

Eine Cellulosehülle der Flachbreite 165 mm wurde nach dem bekannten Viskosespinnverfahren produziert und das Material an einer Flachlegekante mit einem scharfen Messer kontinuierlich aufgeschnitten. Die Rolle der aufgeschnittenen Hülle wurde in einem zweiten Verfahrensschritt über eine Formschulter zu einem Flachmaterial geöffnet und mit einer 3 %igen wäßrigen Proteinlösung beschichtet. Auf die beschichtete Seite wurde feinkörniges Paprika-Gewürz aufgetragen und darüber abermals eine Schicht aus der 3 %igen wäßrigen Proteinlösung gelegt. Das beschichtete Cellulosematerial wurde anschließend in einem Trockenkanal bei 90°C (Lufttemperatur) getrocknet. Direkt nach dem Trocknen wurde das Cellulosematerial über eine weitere Formschulter geführt, die es erneut rund formte.

Die Längskanten des erhaltenen rundgelegten Materials wurden mit einem Extrusionskleber auf PU-Basis zusammengeklebt. Das so hergestellte schlauchförmige Material wurde anschließend aufgerollt und 7 Tage lang auf der Rolle gelagert. Die Hülle wurde dann von außen vorsichtig gewässert, um sie besser handhabbar zu machen und mit Fleischwurstbrät gefüllt. Die so erhaltene Wurst wurde bei 78°C (Kerntemperatur) gekocht und die Hülle anschließend abgeschält. Es resultierte ein optisch sehr ansprechender, roter Paprika-Gewürzüberzug auf der Oberfläche der Fleischwurst, ohne daß Teile der Füllung oder des Gewürzes auf der abgeschälten Hülle zurückblieben.

### Beispiel 2

Wie im Beispiel 1 beschrieben wurde eine Cellulosehülle mit einer Flachbreite 140 mm gefertigt, aufgeschnitten und das flachliegende Material mit einer 2,5 %igen wäßrigen Methylcelluloselösung beschichtet. Auf diese Beschichtung wurde getrocknete, gerebelte Petersilie aufgetragen, die dann wiederum mit der wäßrigen Methylcelluloselösung beschichtet wurde.

Die Hülle wurde nach dem Trocknen bei 90°C (Lufttemperatur) und dem erneuten Rundformen mit einem Cyanacrylat-Klebstoff (®Loctite 401 der Henkel KGaA, Düsseldorf) zusammengeklebt, vorsichtig von außen gewässert und mit Schinken gefüllt. Nach dem Kochen wurde die Hülle abgeschält.

Es wurde ein gleichmäßig mit Petersilie beschichteter, appetitlich aussehender gekochter Schinken erhalten.

### Beispiel 3

Auf eine Polyamidfolie der Größe 50 x 60 cm wurde per Rakelantrag eine 5 %ige, auf pH 9 eingestellten Milcheiweißlösung (®Rovita FN 5 der Rovita GmbH, Engelsberg, Deutschland), die 3 % Glycerin enthielt, aufgetragen, wobei eine 15 µm dicke Beschichtung entstand. Auf die noch feuchte Schicht wurde getrocknete, geschnittene Petersilie gestreut und darüber eine dünne Fixierschicht der gleichen alkalischen Milcheiweißlösung gegeben. Die beschichtete Folie wurde 1 Minute lang bei 80°C getrocknet.

In diese derart beschichtete Folie wurde ein fertiges, gekochtes Formschinkenprodukt gewickelt, das umwickelte Produkt erneut in die Form gelegt und 24 Stunden bei 7°C gelagert. Nach dieser Zeit wurde das Produkt aus der Form entfernt und die Folie abgewickelt. Es resultierte ein optisch sehr ansprechender, mit Petersilie ummantelter Formschinken.

### Beispiel 4

Auf eine stärkehaltige Mehrschichtfolie mit einem Aufbau (von innen nach außen) PA / (PE + HV) / (thermoplastische Stärke + PA 12) und einer von Größe 40 x 50 cm wurde per Rakelantrag eine 3 %ige wäßrige Methylcelluloselösung (®Methocell A 150 der Georg Breuer GmbH), die 2,5 % 80 %ige Milchsäure als Konservierungsmittel enthielt, aufgebracht, wobei eine Schicht mit einer Dicke von 15 µm entstand. Auf die noch feuchte Schicht wurde getrockneter, gerebelter Dill aufgetragen und die Folie 50 Sekunden lang bei 70°C getrocknet.

Die Folie wurde um rohes Fischfilet geschlagen, und dieses, beschwert mit einem leichten Gewicht, 24 Stunden lang bei 5°C gelagert. Danach wurde das Fischfilet aus der Folie entfernt, das vollflächig mit Dill belegt war.

### Beispiel 5

Auf ein mit Cellulose beschichtetes Faserpapier der Größe 30 x 50 cm wurde per Rakelantrag eine 40 %ige wäßrige Eiweißhydrolysatlösung aufgebracht, wobei eine Schicht mit eine Dicke von 20 µm resultierte. Auf die noch feuchte Schicht wurde gleichmäßig "edelsüßes" Paprikagewürz gestreut und darüber wiederum eine dünne Schicht der Eiweißhydrolysatlösung aufgetragen. Das Paprikagewürz bestand aus Partikeln mit einer Größe von etwa 60 bis 300 µm. Durchschnittlich hatten die Partikel eine Größe von etwa 100 µm. Das derart beschichtete Faserpapier wurde 1 Minute lang bei 100°C getrocknet.

Ein gekochter Schinken wurde in dem Papier eingewickelt und mit leichtem Druck zwischen zwei Platten für 24 Stunden bei 5°C gelagert und nach dieser Zeit aus der Umhüllung genommen. Es resultierte ein appetitanregender, mit Paprika ummantelter Schinken.

### Beispiel 6

Beispiel 5 wurde wiederholt mit dem Unterschied, daß als Trägermaterial Polyamid und als Additiv Pfefferschrot eingesetzt wurde. Nach der Kaltlagerung wurde ein mit Pfeffer ummantelter gekochter Schinken in einwandfreier Qualität erhalten.

### Beispiel 7:

Ein Gewebe aus 100 % Zellwolle mit einem Gewicht von 110 g/m² wurde mit homogenisiertem Eiklar (Trockenmasse: 15 %) beschichtet, wobei das Protein in das Gewebe eingedrückt wurde. Auf dem Gewebe wurde dann eine etwa 0,1 bis 0,15 mm dicke Schicht aufgetragen. Anschließend wurden grober Pfeffer gleichmäßig auf die Schicht aufgebracht. Das so beschichtete Material wurde dann von unten auf eine Temperatur von 80 bis 85 °C erwärmt um das Protein irreversibel zu koagulieren. Um die Gewürzschicht zusätzlich zu fixieren, wurde eine dünne Proteinschicht auf das Gewürz aufgebracht. Danach wurde das Material getrocknet.

Nach dem Trocknen wurde das beschichtete und mit Gewürzen versehene Gewebe zu einem Schlauch geformt, dessen Längskanten miteinander vernäht wurden. Die schlauchförmige Hülle wurde mit Schinkenbrät gefüllt. Die gefüllte Hülle wurde in einem Heißluftofen bis zu einer Kerntemperatur von 83 °C gegart. Anschließend ließ man sie über Nacht abkühlen.

Nach dem Entfernen der Hülle zeigte sich, daß das Gewürz gleichmäßig und vollständig auf die Oberfläche des Schinkens übertragen worden war. Das koagulierte Eiklar blieb am Gewebe zurück, ein anderer Teil hatte sich mit dem Brät verbunden.

## Patentansprüche

1. Ein- oder mehrschichtige Nahrungsmittelhülle mit einem Träger auf Basis mindestens eines nicht wasserlöslichen, thermoplastischen Polymers, eines Polymers tierischen oder pflanzlichen Ursprungs oder regenerierter oder gefällter Cellulose, die eine Beschichtung aufweist, die ein Bindemittel und mindestens ein Additiv enthält, das zusammen mit Bindemittel auf das Füllgut übertragbar ist, **dadurch gekennzeichnet, daß** das Additiv aus fein- bis grobkörnigen Nahrungsmitteln oder Mischungen mit einer mittleren Partikelgröße von mindestens 60 µm besteht und daß eine zusätzliche Bindemittelschicht das Additiv überdeckt und damit fixiert.

2. Hülle nach Anspruch 1, **dadurch gekennzeichnet, daß** sie flächen- oder schlauchförmig ist, und daß das nicht wasserlösliche, thermoplastische Polymer ein Polyolefin, Polyamid, Polyester, Polyvinylidenchlorid oder Polyvinylchlorid ist.

3. Hülle nach Anspruch 1 oder 2, **dadurch gekennzeichnet, daß** der Träger ein Textilmaterial, eine Folie oder eine Kombination daraus ist.

4. Hülle nach Anspruch 2, **dadurch gekennzeichnet, daß** sich die Beschichtung bei der schlauchförmigen Hülle auf der Innenseite des Schlauches befindet und die Hülle eine Längsnaht aufweist.

5. Hülle nach einem oder mehreren der Ansprüche 1 bis 4, **dadurch gekennzeichnet, daß** das Bindemittel ein Protein, vorzugsweise Casein oder ein Proteinhydrolysat, ein Polysaccharid, vorzugsweise ein Ether oder Ester der Cellulose, besonders bevorzugt Methylcellulose, oder ein Gemisch daraus ist.

6. Hülle nach Anspruch 5, **dadurch gekennzeichnet, daß**das Protein ein unter Wärmeeinwirkung koagulierbares Protein, bevorzugt Molkeprotein, Eiklarprotein oder Blutplasma, oder eine daraus hergestellte oder isolierte Fraktion, ist.

7. Hülle nach einem oder mehreren der Ansprüche 1 bis 4, **dadurch gekennzeichnet, daß** das Bindemittel ein Fett, Wachs, Öl oder eine andere hydrophobe, in Wasser nicht lösliche Substanz ist, die unter Wärmeeinwirkung bis etwa 90 °C erweicht oder flüssig wird und **dadurch** eine Übertragung des Additivs bewirkt, bevorzugt Talg, ein trocknendes Öl, ein nichttrocknendes Öl, ein halbtrocknendes Öl, eine Fettsäure, ein Fettsäureester, Fettalkohol oder eine Mischung daraus ist.

8. Hülle nach einem oder mehreren der Ansprüche 1 bis 7, **dadurch gekennzeichnet, daß** sie mindestens eine Außenbeschichtung aufweist, vorzugsweise aus einem Polyvinylidenchlorid-Harz.

9. Hülle nach Anspruch 8, **dadurch gekennzeichnet, daß** die Außenbeschichtung nach dem Trocknen ein Gewicht von bis zu 150 g/m², bevorzugt 30 bis 120 g/m², aufweist.

10. Hülle nach Anspruch 1, **dadurch gekennzeichnet, daß** das Additiv eine feste Konsistenz besitzt und es sich um feinkörnige bis grobkörnige oder stückige, partikelförmige Aroma- und/oder Geschmacksstoffe handelt.

11. Hülle nach Anspruch 10, **dadurch gekennzeichnet, daß** es sich blei den Aroma- und/oder Geschmacksstoffen um Gewürze, Kräuter, Gemüse, Pilze, Früchte, Getreide, Nüsse und/oder Käse handelt.

12. Hülle nach Anspruch 1, **dadurch gekennzeichnet, daß** sie neben dem Additiv mindestens einen Nahrungsmittelzusatzstoff enthält, bevorzugt ein farbgebendes Mittel oder Flüssigrauch.

13. Hülle nach Anspruch 12, **dadurch gekennzeichnet, daß** die zusätzliche Bindemittelschicht aus einer filmbildenden Substanz, bevorzugt einem filmbildenden Protein, besonders bevorzugt aus Kollagenfasern, besteht.

14. Verfahren zur Herstellung einer Nahrungsmittelhülle nach einem oder mehreren der Ansprüche 1 bis 10, **dadurch gekennzeichnet, daß** es folgende Schritte umfaßt:
- Bereitstellen eines schlauch- oder bahnförmigen Trägermaterials,
- Beschichten mit einem Bindemittel,
- Aufbringen eines Additivs,
- gegebenenfalls erneutes Beschichten mit einem Bindemittel und
- Trocknen des beschichteten Trägermaterials.

15. Verfahren gemäß Anspruch 14, **dadurch gekennzeichnet, daß** das Additiv auf eine Schicht aus einem koagulierbaren Protein aufgebracht und dieses anschließend durch Hitzeeinwirkung koaguliert wird.

16. Verfahren nach Anspruch 14, **dadurch gekennzeichnet, daß** auf eine Seite des Trägermaterials, die nicht mit einem Bindemittel versehen ist, eine Schicht aufgebracht wird, die als Wasserdampf- und/oder Sauerstoffbarriere wirkt.

17. Verfahren nach Anspruch 14 oder 15, **dadurch gekennzeichnet, daß** das bahnförmige Trägermaterial zu einem Schlauch mit überlappenden Längskanten geformt wird, wobei sich die mit dem Additiv versehene Bindemittelschicht auf der Innenseite des Schlauchs befindet, und die überlappenden Kanten mit einer Naht fixiert werden.

18. Verfahren nach Anspruch 14, **dadurch gekennzeichnet, daß** eine schlauchförmige, vorzugsweise nahtlose Hülle auf der Außenseite beschichtet, mit einem Additiv versehen, getrocknet und nach dem Trocknen gewendet wird, woraus eine innenbeschichtete Hülle resultiert.

19. Verwendung der Nahrungsmittelhülle nach einem der Ansprüche 1 bis 12 zum Transfer von übertragbaren Additiven auf Lebensmittel.

20. Verwendung der Nahrungsmittelhülle nach Anspruch 14 für Brüh- oder Kochwurst oder zur Veredelung von Schinken oder Käse, wobei die Additive durch Wärmeeinwirkung übertragen werden.

21. Verwendung der Nahrungsmittelhülle nach Anspruch 14 für Fisch-, Fleisch- und Wurstwaren, insbesondere Rohwurst und gekochter Schinken, sowie Käse, wobei die Additive bei weniger als Raumtemperatur übertragen werden.

## Claims

1. A single- or multilayer food casing comprising a carrier based on at least one water-insoluble, thermoplastic polymer, on a polymer of animal or vegetable origin or on regenerated or precipitated cellulose, which has a coating which comprises a binder and at least one additive which is transferable to the filling together with binder, wherein the additive consists of fine to coarse foods or mixtures having a mean particle size of at least 60 µm and an additional binder layer covers and hence fixes the additive.

2. The casing as claimed in claim 1, which is flat or tubular, and wherein the water-insoluble, thermoplastic polymer is a polyolefin, polyamide, polyester, polyvinylidene chloride or polyvinyl chloride.

3. The casing as claimed in claim 1 or 2, wherein the carrier is a textile material, a film or a combination thereof.

4. The casing as claimed in claim 2, wherein the coating in the case of the tubular casing is disposed on the inside of the tube and the casing has a longitudinal seam.

5. The casing as claimed in one or more of claims 1 to 4, wherein the binder is a protein, preferably casein or a protein hydrolyzate, a polysaccharide, preferably an ether or ester of cellulose, more preferably methylcellulose, or a mixture thereof.

6. The casing as claimed in claim 5, wherein the protein is a protein coagulable under the action of heat, preferably whey protein, egg white protein or blood plasma, or a fraction produced or isolated therefrom.

7. The casing as claimed in one or more of claims 1 to 4, wherein the binder is a fat, wax, oil or another hydrophobic, water-insoluble substance which softens or becomes liquid under the action of heat up to about 90°C and thus brings about a transfer of the additive, preferably tallow, a drying oil, a nondrying oil, a semidrying oil, a fatty acid, a fatty acid ester, fatty alcohol or a mixture thereof.

8. The casing as claimed in one or more of claims 1 to 7, which has at least one outer coating, preferably of a polyvinylidene chloride resin.

9. The casing as claimed in claim 8, wherein the outer coating, after drying, has a weight of up to 150 g/m², preferably 30 to 120 g/m².

10. The casing as claimed in claim 1, wherein the additive has a firm consistency and comprises fine-grain to coarse-grain or piece-form, particulate aromas and/or flavorings.

11. The casing as claimed in claim 10, wherein the aromas and/or flavorings are spices, herbs, vegetables, mushrooms, fruits, cereals, nuts and/or cheese.

12. The casing as claimed in claim 1, which comprises, as well as the additive, at least one food additive, preferably a colorant or liquid smoke.

13. The casing as claimed in claim 12, wherein the additional binder layer consists of a film-forming substance, preferably a film-forming protein, more preferably composed of collagen fibers.

14. A process for producing a food casing as claimed in one or more of claims 1 to 10, which comprises the following steps:
- providing a tubular or web-form carrier material,
- coating with a binder,
- applying an additive,
- optionally again coating with a binder and
- drying the coated carrier material.

15. The process as claimed in claim 14, wherein the additive is applied to a layer composed of a coagulable protein which is then coagulated by the action of heat.

16. The process as claimed in claim 14, wherein a layer which acts as a steam and/or oxygen barrier is applied to one side of the carrier material which is not provided with a binder.

17. The process as claimed in claim 14 or 15, wherein the web-form carrier material is shaped to a tube with overlapping longitudinal edges, the binder layer provided with the additive being on the inside of the tube, and the overlapping edges being fixed with a seam.

18. The process as claimed in claim 14, wherein a tubular, preferably seamless casing is coated on the outside, provided with an additive, dried and, after drying, reversed, which results in an internally coated casing.

19. The use of the food casing as claimed in one of claims 1 to 12 for the transfer of transferable additives to foods.

20. The use of the food casing as claimed in claim 14 for scalded-emulsion sausage or cooked-meat sausage, or for the finishing of ham or cheese, the additives being transferred by the action of heat.

21. The use of the food casing as claimed in claim 14 for fish, meat and sausage products, especially raw-meat sausage and cooked ham, and also cheese, the additives being transferred at below room temperature.

## Revendications

1. Habillage alimentaire à une ou plusieurs couches avec un support à base d'au moins un polymère thermoplastique non soluble dans l'eau, d'un polymère d'origine animale ou végétale ou de cellulose régénérée ou précipitée qui présente une enduction qui contient un liant et au moins un additif qui est transmissible avec le liant à la charge, **caractérisé en ce que** l'additif est constitué de produits alimentaires à granulométrie fine à grossière ou de mélanges avec une taille de particule moyenne d'au moins 60 µm et qu'une couche de liant supplémentaire recouvre l'additif et le fixe par là même.

2. Habillage selon la revendication 1, **caractérisé en ce qu'**il est planiforme ou tubulaire et que le polymère thermoplastique non soluble dans l'eau est une polyoléfine, un polyamide, un polyester, un chlorure de polyvinylidène ou un chlorure de polyvinyle.

3. Habillage selon la revendication 1 ou 2, **caractérisé en ce que** le support est une matière textile, une feuille ou une combinaison de ces éléments.

4. Habillage selon la revendication 2, **caractérisé en ce que** l'enduction, pour l'habillage tubulaire, se trouve sur la face intérieure du boyau et que l'habillage présente un joint longitudinal.

5. Habillage selon l'une ou plusieurs des revendications 1 à 4, **caractérisé en ce que** le liant est une protéine, de préférence de la caséine ou un hydrolysate protéique, un polysaccharide, de préférence un éther ou un ester de la cellulose, et mieux encore, une méthylcellulose ou un mélange de ces éléments.

6. Habillage selon la revendication 5, **caractérisé en ce que** la protéine est une protéine coagulable sous l'action de la chaleur, de préférence une protéine de lait, une protéine d'albumen ou un plasma sanguin ou encore une fraction obtenue ou isolée à partir de ces éléments.

7. Habillage selon l'une ou plusieurs des revendications 1 à 4, **caractérisé en ce que** le liant est une graisse, une cire, une huile ou une autre substance hydrophobe non soluble dans l'eau qui se ramollit ou devient liquide sous l'action de la chaleur jusqu'à environ 90°C et entraîne ainsi un transfert de l'additif, de préférence du talc, une huile siccative, une huile non siccative, une huile semi-siccative, un acide gras, un ester d'acide gras, un alcool gras ou un mélange de ces éléments.

8. Habillage selon l'une ou plusieurs des revendications 1 à 7, **caractérisé en ce qu'**il présente au moins une enduction extérieure, de préférence à partir d'une résine de chlorure de polyvinylidène.

9. Habillage selon la revendication 8, **caractérisé en ce que** l'enduction extérieure présente, après séchage, un poids de 150 g/m² maximum, de préférence de 30 à 120 g/m².

10. Habillage selon la revendication 1, **caractérisé en ce que** l'additif possède une consistance ferme et qu'il s'agit de substances aromatiques et/ou de sapidité à granulométrie fine à grossière ou agglomérées en forme de particule.

11. Habillage selon la revendication 10, **caractérisé en ce qu'**il s'agit, pour les matières aromatiques et/ou de sapidité, d'épices, d'herbes, de légumes, de champignons, de fruits, de céréales et/ou de fromages.

12. Habillage selon la revendication 1, **caractérisé en ce qu'**il comprend, outre l'additif, au moins un adjuvant pour produits alimentaires, de préférence un produit colorant ou un fumet liquide.

13. Habillage selon la revendication 12, **caractérisé en ce que** la couche de liant supplémentaire est constituée d'une substance filmogène, de préférence d'une protéine filmogène et mieux encore de fibres collagènes.

14. Procédé pour la préparation d'un habillage alimentaire selon l'une ou plusieurs des revendications 1 à 10, **caractérisé en ce qu'**il comprend les étapes suivantes:
- préparation d'un support de forme tubulaire ou en forme de nappe
- enduction au moyen d'un liant
- application d'un additif
- le cas échéant, nouvelle enduction au moyen d'un liant et
- séchage du support enduit

15. Procédé selon la revendication 14, **caractérisé en ce que** l'additif est appliqué sur une couche d'une protéine coagulable et que celle-ci est ensuite coagulée sous l'effet de la chaleur.

16. Procédé selon la revendication 14, **caractérisé en ce que**, sur une face du support, qui n'est pas pourvu d'un liant, on applique une couche qui agit comme pare-vapeur d'eau et/ou pare-acide.

17. Procédé selon la revendication 14 ou 15, **caractérisé en ce que** le support en forme de nappe est formé pour donner un boyau aux arêtes longitudinales qui se chevauchent, la couche de liant dotée de l'additif se trouvant sur l'intérieur du boyau et les arêtes chevauchants sont fixées au moyen d'une couture.

18. Procédé selon la revendication 14, **caractérisé en ce qu'**un habillage tubulaire, de préférence sans coutures, est enduit sur la face extérieure, pourvue d'un additif, séché et retourné après le séchage, ce qui donne un habillage enduit sur l'intérieur.

19. Utilisation de l'habillage alimentaire selon l'une des revendications 1 à 12 pour le transfert d'additifs transmissibles sur des produits alimentaires.

20. Utilisation de l'habillage alimentaire selon la revendication 14 pour des saucisses à bouillir ou à cuire ou pour l'amélioration de jambons ou de fromages, les additifs étant transférés sous l'action de la chaleur.

21. Utilisation de l'habillage alimentaire selon la revendication 14 pour des produits à base de poisson, de viande et de saucisse, en particulier la saucisse crue et le jambon cuit, de même que les fromages, les additifs étant transféré à une température inférieure à la température ambiante.
